Europäisches Patentamt

European Patent Office

Office européen des brevets

(11) Veröffentlichungsnummer: **0 418 559 A2**

## (12) EUROPÄISCHE PATENTANMELDUNG

(21) Anmeldenummer: 90115762.8

(22) Anmeldetag: 17.08.90

(51) Int. Cl.5: **C08J 9/16**, C08K 5/02, C08J 9/00, //C08L25/04

Die Bezeichnung der Erfindung wurde geändert (Richtlinien für die Prüfung im EPA, A-III, 7.3).

(30) Priorität: 26.08.89 DE 3928284

(43) Veröffentlichungstag der Anmeldung:
27.03.91 Patentblatt 91/13

(84) Benannte Vertragsstaaten:
AT BE DE ES FR GB IT NL

(71) Anmelder: BASF Aktiengesellschaft
Carl-Bosch-Strasse 38
W-6700 Ludwigshafen(DE)

(72) Erfinder: Hahn, Klaus, Dr.
Im Buegen 9
W-6719 Kirchheim(DE)
Erfinder: Guhr, Uwe, Dr.
Beim Hochgericht 9
W-6718 Gruenstadt(DE)
Erfinder: Hintz, Hans, Dr.
Wolframstrasse 4
W-6700 Ludwigshafen(DE)
Erfinder: Wittenberg, Dietmar, Dr.
Rheindammstrasse 28
W-6800 Mannheim 1(DE)
Erfinder: Gleich, Peter, Dr.
An der Froschlache 19
W-6700 Ludwigshafen(DE)

(54) Schwerentflammbare expandierbare Styrolpolymerisate.

(57) Schwer entflammbare expandierbare Styrolpolymerisate, enthaltend ein Styrol(co)polymerisat, 0,4 bis 6 Gew.-% Hexabromcyclododecan mit einer mittleren Teilchengröße von 1 bis 50 $\mu$m, wobei die Teilchen mit einer festen Beschichtung mit einer Dicke von 1/100 bis 1/10 des Teilchendurchmessers versehen sind, die in Wasser und Styrol unlöslich ist, 1 bis 10 Gew.-% eines $C_3$- bis $C_6$-Kohlenwasserstoffs als Treibmittel und gegebenenfalls übliche Zusatzstoffe, zeichnen sich durch einen verminderten Innenwassergehalt aus und lassen sich zu Schaumstoffen verarbeiten, die eine verbesserte Schaumstruktur und eine hohe UV-Stabilität aufweisen.

EP 0 418 559 A2

# SCHWERENTFLAMMBARE EXPANDIERBARE STYROLPOLYMERISATE UND SCHAUMSTOFFE SOWIE FLAMMSCHUTZMITTEL

In der Technik wird seit langer Zeit für die Herstellung schwer entflammbarer expandierbarer Styrolpolymerisate und daraus hergestellter Schaumstoff-Formteile als Flammschutzmittel Hexabromcyclododecan verwendet. Derartige expandierbare Styrolpolymerisate weisen einen relativ hohen Innenwassergehalt auf, die Schaumstruktur der Formteile ist unbefriedigend und die Schaumstoffe sind unbeständig gegenüber UV-Strahlung.

Der Erfindung lag die Aufgabe zugrunde, den Innenwassergehalt zu reduzieren, die Schaumstruktur zu verbessern und die Beständigkeit gegenüber UV-Strahlung zu verbessern.

Überraschenderweise wurde nun gefunden, daß diese Aufgaben sämtlich gelöst werden, wenn man Hexabromcyclododecan mit einer mittleren Teilchengröße von 1 bis 50 $\mu$m verwendet, dessen Teilchen mit einer festen Beschichtung mit einer Dicke von 1/100 bis 1/10 des Teilchendurchmessers versehen sind, die in Wasser und in Styrol unlöslich ist.

Gegenstand der Erfindung sind somit perlförmige, schwer entflammbare, expandierbare Styrolpolymerisate enthaltend

a) Polystyrol und/oder ein Styrolcopolymerisat mit mindestens 50 Gew.-% einpolymerisiertem Styrol

b) 0,4 bis 6 Gew.-%, bezogen auf a), Hexabromcyclododecan mit einer mittleren Teilchengröße von 1 bis 50 $\mu$m, wobei diese Teilchen mit einer festen Beschichtung mit einer Dicke von 1/100 bis 1/10 des Teilchendurchmessers versehen sind, die in Wasser und in Styrol unlöslich ist,

c) 1 bis 10 Gew.-%, bezogen auf a), eines aliphatischen $C_3$- bis $C_6$-Kohlenwasserstoffs als Treibmittel, und gegebenfalls

d) übliche Zusatzstoffe in wirksamen Mengen.

Gegenstand der Erfindung sind ferner schwer entflammbare Schaumstoffe, die derartiges Hexabromdodecan enthalten. Gegenstand der Erfindung sind weiterhin Flammschutzmittel, bestehend im wesentlichen aus Hexabromcyclo dodecan mit einer mittleren Teilchengröße von 1 bis 50 $\mu$m, wobei die Teilchen mit einer festen Beschichtung mit einer Dicke von 1/100 bis 1/10 des Teilchendurchmessers versehen sind, die in Wasser und in Styrol unlöslich ist.

Überraschenderweise wird auch die Dimensionsstabilität der aus den neuen expandierbaren Styrolpolymerisaten hergestellten Schaumstoff-Formkörper positiv beeinflußt.

Als Hauptkomponente a) enthalten die neuen Produkte Polystyrol und/oder ein Styrolcopolymerisat mit mindestens 50 Gew.-%, vorzugsweise mindestens 80 Gew.-% einpolymerisiertem Polystyrol. Als Comonomere kommen z.B. in Frage $\alpha$-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure-(anhydrid). Vorteilhaft enthält das Polystyrol eine geringe Menge eines Vernetzers einpolymerisiert, d.h. einer Verbindung mit mehr als einer, vorzugsweise 2 Doppelbindungen, wie Divinylbenzol, Butadien oder Butandioldiacrylat. Der Vernetzer wird im allgemeinen in Mengen von 0,005 bis 0,05 Mol-%, bezogen auf Styrol, verwendet.

Zur Erzielung einer besonders hohen Expandierbarkeit ist es zweckmäßig, daß das Styrolpolymerisat ein mittleres Molekulargewicht $M_w$ (Gewichtsmittel), gemessen nach der GPC-Methode, zwischen 60 000 und 200 000 aufweist, insbesondere zwischen 130 000 und 180 000. Verbesserte Verarbeitungseigenschaften weist der Schaumstoff dann auf, wenn die hochmolekulare Flanke des nach der GPC-Methode gemessenen Molekulargewichtsteilungskurve so steil ist, daß die Differenz der Mittelwerte ($M_{z+1}$-$M_z$) weniger als 150 000 beträgt. Die GPC-Methode ist beschrieben in G. Glöckler, Polymercharakterisierung, Chromatographische Methoden, Band 17, Hüthig-Verlag, Heidelberg 1982. Die genannten Mittelwerte sind beschrieben in H.G. Elias, Makromoleküle, Hüthig-Verlag, Heidelberg 1971, Seiten 52-64.

Styrolpolymerisate, die die oben genannten mittleren Molgewichte aufweisen können durch Mitverwendung von Reglern bei der Polymerisation erhalten werden. Als Regler verwendet man zweckmäßig 0,01 bis 1,5 Gew.-%, vorzugsweise 0,01 bis 0,5 Gew.-% einer bromfreien organischen Verbindung mit einer Kettenübertragungskonstante K zwischen 0,1 und 50. Zweckmäßig wird der Regler während der Polymerisation erst bei einem Umsatz von 20 bis 90 % zugefügt, um eine steile hochmolekulare Flanke der Molekulargewichtsverteilungskurve zu erzielen.

Ein vorteilhaftes hohes Expansionsvermögen läßt sich auch dadurch erzielen, daß die Komponente a) 0,1 bis 10 Gew.-%, vorteilhaft 0,5 bis 10 Gew.-% eines Styrolpolymeren mit einem mittleren Molekulargewicht (Gewichtsmittel) zwischen 500 und 5 000 enthält.

Weitere Details der Molekulargewichtsregelung bei der Herstellung expandierbarer Styrolpolymerisate sind der EP-B 106 129 zu entnehmen.

Styrolpolymerisate, die 0,1 bis 2 Gew.-% vorzugsweise 0,15 bis 1,5 Gew.-%, einpolymerisiertes Acrylnitril enthalten, führen zu Schaumstoffen, die sich durch weitgehende Schrumpffreiheit auszeichnen. Auch ein Gemisch aus 95 bis 99,5 Gew.-% Polystyrol und 0,5 bis 5 Gew.-% eines styrollöslichen Styrol-Acrylnitril-Copolymeren zeigt diese Eigenschaften, wenn der Gesamtgehalt an Acrylnitril im Gemisch 0,1 bis 2 Gew.-% vorzugsweise 0,15 bis 2 Gew.-% beträgt.

Styrolpolymerisate, die 3 bis 20 Gew.-%, vorzugsweise 5 bis 15 Gew.-% einpolymerisierbares Acrylnitril enthalten, führen zu Schaumstoffen mit hoher Ölbeständigkeit. Auch ein Gemisch aus 50 bis 85 Gew.-% Polystyrol und 15 bis 50 Gew.-% eines styrollöslichen Styrol-Acrylnitril-Copolymeren zeigt diese vorteilhafte Eigenschaft, wenn der Gesamtgehalt an Acrylnitril im Gemisch 3 bis 20 Gew.-% vorzugsweise 5 bis 15 Gew.-%, beträgt. Die Herstellung derartiger Mischungen erfolgt auf einfache Weise dadurch, daß man vor der Polymerisation die vorgesehene Menge des Styrol-Acrylnitril-Ccpolymeren in Styrol löst.

Styrolpolymerisate, die 2 bis 15 Gew.-%, insbesondere 3 bis 12 Gew.-%, Maleinsäure(anhydrid) als Comonomeres enthalten, führen zu Schaumstoffen, die sich durch hohe Wärmeformbeständigkeit auszeichnen. Vorteilhaft geht man dabei von einem Gemisch aus Polystyrol und einem handelsüblichen Styrol-Maleinsäureanhydridcopolymeren mit einem Maleinsäureanhydridgehalt von 15 bis 49 Gew.-% aus, das durch Lösen des Copolymeren in Styrol und anschließende Polymerisation leicht hergestellt werden kann.

Als erfindungswesentlichen Bestandteil b) enthalten die expandierbaren Styrolpolymerisate 0,4 bis 6 Gew.-% vorzugsweise 0,5 bis 4 Gew.-% insbesondere 0,6 bis 3 Gew.-%, bezogen auf das Styrolpolymerisat, Hexabromcyclododecan mit einer mittleren Teilchengröße von 1 bis 50 $\mu$m, vorzugsweise 2 bis 40 $\mu$m, insbesondere 3 bis 30 $\mu$m. Die Teilchen sind mit einer festen, in Wasser und in Styrol unlöslichen Beschichtung versehen mit einer Schichtdicke von 1/100 bis 1/10, vorzugsweise 1/50 bis 1/20 des Teilchendurchmessers. Es sind alle bekannten und für die Mikroverkapselung üblichen organischen Beschichtungsmittel geeignet, die die Voraussetzung der Unlöslichkeit in Wasser und in Styrol erfüllen, wie Aminoplastharze, Melaminharze, Phenolharze. Polyurethane, Polyharnstoffe, Polyester, Polycarbonate, Polyamide, Polyolefine oder Naturprodukte wie gehärtete Gelatine.

Die Beschichtung kann nach üblichen für die Mikroverkapselung bekannten Verfahren erfolgen, wie sie beispielsweise in Kirk-Othmer, Encyclopedia of Chemical Technology, 3rd Edition, Vol. 15 (1981), Seiten 470-493 beschrieben sind. Beispielsweise erfolgt die Beschichtung derart, daß man zu einer wäßrigen Suspension des Hexabromcyclododecans die erforderliche Menge eines in Wasser emulgierten Beschichtungsmittel zufügt und auf den Hexabromcyclododecan-Teilchen niederschlägt. Vorteilhaft geht man von einem Vorkondensat des Beschichtungsmittels aus, welches als wäßrige Lösung oder Dispersion zu einer wäßrigen Suspension des Hexabromcyclododecans hinzugefügt wird. Nach Zugabe eines geeigneten Härters scheidet sich das Beschichtungsmittel ab und schlägt sich auf dem Substrat nieder und umhüllt die Teilchen. Die Herstellung der Beschichtung kann auch dadurch erfolgen, daß man eine wäßrige Dispersion des Hexabromcyclododecans zusammen mit dem Härter vorlegt und das Vorkondensat unter Rühren langsam zudosiert. Das beschichtete Produkt wird anschließend von der wäßrigen Phase abgetrennt und getrocknet. Geeignete Beschichtungsmittel sind u.a. die in der DE-A 26 45 779 beschriebenen wäßrigen Polyurethan- bzw. Polyesterpolyurethan-Dispersionen, die bei einem pH-Wert von 5 bis 9 und Temperaturen zwischen etwa 20 bis 90° C auf dem Hexabromcyclododecan niedergeschlagen werden können.

Mit besonderem Vorteil verwendet man die in der EP-B-26 914 beschriebenen Beschichtungsmittel, insbesondere Melamin-Formaldehyd-Vorkondensate und/oder deren $C_1$- bis $C_4$-Alkylether in Kombination mit einer als Härter wirkenden Säure, beispielsweise einem wasserlöslichen Sulfonsäuregruppen tragenden Polymeren.

Als Treibmittel c) enthalten die expandierbaren Styrolpolymerisate 1 bis 10 Gew.-%, vorzugsweise 3 bis 8 Gew.-%, insbesondere 4 bis 7 Gew.-%, bezogen auf a) eines aliphatischen $C_3$- bis $C_6$-Kohlenwasserstoffs, wie Propan, Butan, Isobutan, n-Pentan, Neopentan und/oder Hexan. Vorzugsweise wird ein handelsübliches Pentan-Gemisch verwendet.

Die expandierbaren Styrolpolymerisate können ferner übliche Zusatzstoffe in wirksamen Mengen enthalten, wie Farbstoffe, Füllstoffe, Stabilisatoren, Flammschutzmittel, Synergisten, Keimbildner, Gleitmittel, Antistatika, beim Verschäumen antiverklebend wirkende Stoffe und Mittel zur Verkürzung der Entformzeit beim Ausschäumen.

Als Zusatzstoffe sind auch Poly-(2,6-dimethyl)-1,4-phenylenether und Poly-1,4-phenylensulfid geeignet. In Mengen von 1 bis 20 Gew.%, bezogen auf die Komponente a) bewirken diese Zusätze eine Erhöhung der Wärmeformbeständigkeit des Schaumstoffs.

Als Zusatzstoffe sind gemäß der Lehre der deutschen Patentanmeldung P 39 15 602.8-44 auch styrollösliche Elastomere geeignet. Diese Zusätze erhöhen die Elastizität des Schaumstoffs.

Die expandierbaren Styrolpolymerisate liegen im allgemeinen in Form von Perlen vor und haben vorteilhaft einen mittleren Durchmesser von 0,1 bis 6 mm, insbesondere 0,4 bis 3 mm.

3

Vorteilhaft erfolgt die Herstellung durch Suspensionspolymerisation in an sich bekannter Weise. Dazu wird das beschichtete Hexabromcyclododecan und gegebenenfalls die Zusatzstoffe mit Styrol vermischt und diese Mischung in wäßriger Suspension polymerisiert. Vorteilhaft setzt man bei der Polymerisation einen Regler oder eine geringe Menge, etwa 0,005 bis 0,05 Mol-% bezogen auf Styrol, eines Vernetzers zu. Das Treibmittel und gegebenenfalls die Zusatzstoffe kann dabei bei der Polymerisation mit vorgelegt werden oder im Laufe der Polymerisation zugefügt werden. Es kann auch erst nach beendeter Polymerisation dem Ansatz zugefügt werden.

Die erhaltenen perlförmigen expandierbaren Styrolpolymerisate werden danach von der wäßrigen Phase abgetrennt, gewaschen und getrocknet.

Für die Herstellung von Schaumstoffen werden die expandierbaren Styrolpolymerisate in bekannter Weise durch Erhitzen auf Temperaturen oberhalb ihres Erweichungspunkts, beispielsweise mit Heißluft oder vorzugsweise mit Dampf expandiert. Die erhaltenen Schaumstoffpartikel können nach dem Abkühlen und gegebenenfalls einer Zwischenlagerung durch erneutes Erhitzen weiter aufgeschäumt werden. Sie können anschließend in bekannter Weise in nicht gasdicht schließenden Formen zu Formteilen verschweißt werden.

Die Herstellung der Schaumstoffe kann auch durch Extrusion erfolgen. Dazu vermischt man das Styrolpolymerisat mit dem beschichteten Hexabromcyclododecan und einem üblichen Treibmittel oder Treibmittelgemisch aus einem Kohlenwasserstoff, Halogenkohlenwasserstoff und/oder $CO_2$ und preßt die Schmelze durch eine Düse, wobei sie zu einem Schaumstoff aufschäumt.

Die erhaltenen Schaumstoffe weisen eine Dichte von etwa 0,01 bis 0,1 $g/cm^3$ auf. Auf Grund ihrer Elastizität finden sie insbesondere Verwendung für stoßdämpfende Verpackungen, als Kernmaterial für Kraftfahrzeugstoßstangen, zur Innenauskleidung von Kraftfahrzeugen, als Polstermaterial, sowie als Wärme- und Schalldämmaterial.

Die in den Beispielen genannten Teile sind Gewichtsteile.

Beispiel A

Beschichtung des Hexabromcyclododecans

In einem mit einem Dispergator (Turrax 45N der Firma Jahnke und Kunkel) versehenen Rührgefäß werden 940 Teile Wasser, 800 Teile Hexabromcyclododecan und als Härter 160 Teile einer 20 %igen Lösung von Poly-2-acrylamido-2-methylpropansulfonsäure/Natriumsalz vorgelegt, die Mischung auf pH 4,5 eingestellt und auf 60 °C erhitzt. Bei einer Rührgeschwindigkeit von ca. 8000 Upm werden innerhalb von 60 min 252 Teile einer auf pH 4,5 eingestellten wäßrigen Lösung zugefügt, die 120 Teile eines partiell methylierten Melamin-Formaldehyd-Vorkondensats (Molverhältnis Melamin:Formaldehyd:Methanol = 1:5,25:2,3). Man rührt anschließend noch bei 500 Upm 3,5 Std. bei 60 °C nach, kühlt die Dispersion auf Raumtemperatur und stellt auf pH 7 ein. Die Dispersion wird anschließend sprühgetrocknet. Das erhaltene beschichtete Hexabromcyclododecan hat eine mittlere Teilchengröße von 7,5 µm. Die Dicke der Beschichtung beträgt 0,3 µm. Die Beschichtung ist unlöslich in Wasser und Styrol.

Beispiele 1 bis 10

In einem druckfesten Rührkessel wurde eine Mischung aus 200 Teilen Wasser, 0,1 Teilen Natriumpyrophosphat, 100 Teilen Styrol, 0,45 Teilen Benzoylperoxid, 0,15 Teilen tert.-Butylperbenzoat, 7,5 Teilen Pentan, sowie den in der Tabelle angegebenen Mengen an Hexabromcyclododecan (HBCD) und Synergist unter Rühren auf 90 °C erhitzt.

Nach 2 Stunden bei 90 °C wurden 4 Teile einer 10 %igen wäßrigen Lösung von Polyvinylpyrrolidon zugegeben.

Dann wurde weitere 5 Stunden bei 90 °C und anschließend 2 Stunden bei 120 °C gerührt. Nach dem Abkühlen wurde das erhaltene Perlpolymerisat von der wäßrigen Phase abgetrennt, gewaschen, oberflächengetrocknet und der Innenwassergehalt nach der Methode von Karl Fischer bestimmt.

Die erhaltenen, expandierbaren Polystyrol-Teilchen wurden in einem handelsüblichen Rührvorschäumer, Typ Rauscher, mit strömendem Wasserdampf auf ein Schüttgewicht von 15 g/l vorgeschäumt.

Nach 24 Stunden Zwischenlagerung wurden die Schaumstoffpartikel in einer Blockform, Typ Rauscher, durch Bedampfung mit Wasserdampf (1,8 bar) zu einem Block verschweißt.

Aus den Schaumstoffblöcken wurden mit einem beheizten Draht Streifen der Abmessung 2 x 20 x 40 cm herausgeschnitten.

Die Messung der Nachbrennzeit erfolgte an unter 45°C geneigten Streifen, die am unteren Ende mit leuchtenden Erdgasflamme entzündet wurden. Die Zeit bis zum Erlöschen der Flamme wurde gemessen und der Mittelwert aus 20 Einzelmessungen bestimmt. Die Bestimmung der UV-Beständigkeit erfolgte nach ASTM/D1925-70.

Die erhaltenen Ergebnisse sind in der Tabelle zusammengestellt.

Tabelle

| Beispiel | HBCD unbeschichtet [Gew.-%] | HBCD gemäß Beispiel A beschichtet [Gew.-%] | Dicumylperoxid (Synergist) [Gew.-%] | Innenwasser [Gew.-%] | Zellzahl [Zellen/mm] | Zellstruktur | Brandverhalten (Verlöschzeit) [sec] | UV-Beständigkeit |
|---|---|---|---|---|---|---|---|---|
| 1 (Vergleich) | 0,7 | - | 0,2 | 2,0 | 2 - 20 | inhomogen | 6 | vergilbt |
| 2 (Vergleich) | 0,8 | - | 0,2 | 2,4 | 3 - 25 | inhomogen | 5 | vergilbt |
| 3 (Vergleich) | 1,2 | - | - | 3,1 | 2 - 30 | inhomogen | 3 | vergilbt |
| 4 | - | 0,7 | 0,2 | 0,7 | 3 - 5 | homogen | 7 | stabil |
| 5 | - | 0,8 | 0,2 | 0,9 | 4 - 5 | homogen | 6 | stabil |
| 6 | - | 1,0 | 0,2 | 1,1 | 3 - 6 | homogen | 4 | stabil |
| 7 | - | 1,2 | 0,2 | 1,1 | 4 - 7 | homogen | 2,5 | stabil |
| 8 | - | 1,2 | - | 1,0 | 3 - 7 | homogen | 3 | stabil |
| 9 | - | 1,5 | - | 1,4 | 5 - 7 | homogen | 2,5 | stabil |
| 10 | - | 1,7 | - | 1,7 | 5 - 8 | homogen | 2 | stabil |

**Ansprüche**

1. Perlförmige, schwer entflammbare, expandierbare Styrolpolymerisate enthaltend
   a) Polystyrol und/oder ein Styrolcopolymerisat mit mindestens 50 Gew.-% einpolymerisiertem Styrol
   b) 0,4 bis 6 Gew.-%, bezogen auf a), Hexabromcyclododecan mit einer mittleren Teilchengröße von 1 bis 50 $\mu$m, wobei diese Teilchen mit einer festen Beschichtung mit einer Dicke von 1/100 bis 1/10 des Teilchendurchmessers versehen sind, die in Wasser und in Styrol unlöslich ist,
   c) 1 bis 10 Gew.-%, bezogen auf a), eines aliphatischen $C_3$- bis $C_6$-Kohlenwasserstoffs als Treibmittel, und gegebenenfalls
   d) übliche Zusatzstoffe in wirksamen Mengen.

2. Verfahren zur Herstellung perlförmiger, schwer entflammbarer expandierbarer Styrolpolymerisate gemäß Anspruch 1, dadurch gekennzeichnet, daß man Styrol und gegebenenfalls weitere Comonomere in wäßriger Suspension polymerisiert in Gegenwart von 0,4 bis 6 Gew.-% Hexabromcyclododecan mit einer mittleren Teilchengröße von etwa 1 bis 50 $\mu$m, wobei diese Teilchen mit einer festen Beschichtung mit einer Dicke von 1/10 bis 1/100 des Teilchendurchmessers versehen sind, die in Wasser und in Styrol unlöslich ist, und daß man vor, während oder nach der Polymerisation 1 bis 10 Gew.-% eines $C_3$- bis $C_6$-Kohlenwasserstoffs als Treibmittel und gegebenenfalls wirksame Mengen an üblichen Zusatzstoffen zufügt.

3. Schwer entflammbare Schaumstoffe der Dichte 0,01 bis 0,1 $g/cm^3$, enthaltend
   a) Polystyrol und/oder ein Styrolcopolymerisat mit mindestens 50 Gew.-% einpolymerisiertem Styrol
   b) 0,4 bis 6 Gew.-%, bezogen auf a), Hexabromcyclododecan mit einer mittleren Teilchengröße von 1 bis 50 $\mu$m, wobei diese Teilchen mit einer festen Beschichtung mit einer Dicke von 1/100 bis 1/10 des Teilchendurchmessers versehen sind, die in Wasser und in Styrol unlöslich ist, und gegebenenfalls
   c) übliche Zusatzstoffe in wirksamen Mengen.

4. Verfahren zur Herstellung schwer entflammbarer Schaumstoffe gemäß Anspruch 3, dadurch gekennzeichnet, daß man perlförmige, schwer entflammbare expandierbare Styrolpolymerisate gemäß Anspruch 1 durch Erhitzen auf eine Temperatur oberhalb des Erweichungspunktes expandiert und die erhaltenen Schaumstoffpartikel in nicht gasdicht schließenden Formen durch Erhitzen miteinander verschweißt.

5. Flammschutzmittel, bestehend im wesentlichen aus Hexabromcyclododecan mit einer mittleren Teilchengröße von 1 bis 50 $\mu$m, wobei die Teilchen mit einer festen Beschichtung mit einer Dicke von 1/100 bis 1/10 des Teilchendurchmessers versehen sind, die in Wasser und in Styrol unlöslich ist.